# EUROPÄISCHE PATENTSCHRIFT

(11) **EP 4 449 220 B1**
(45) Veröffentlichungstag und Bekanntmachung des Hinweises auf die Patenterteilung: **24.09.2025**
(21) Anmeldenummer: 23713313.7
(22) Anmeldetag: 09.03.2023
(51) Int. Cl.: G05B 19/418

(54) **LEITSYSTEM FÜR EINE TECHNISCHE ANLAGE UND BETRIEBSVERFAHREN**
CONTROL SYSTEM FOR A TECHNICAL PLANT AND METHOD OF OPERATION
SYSTÈME DE COMMANDE POUR UNE INSTALLATION TECHNIQUE ET PROCÉDÉ DE FONCTIONNEMENT

(30) Priorität: 10.03.2022 EP 22161338
(43) Veröffentlichungstag der Anmeldung: 23.10.2024
(73) Patentinhaber: Siemens Aktiengesellschaft, 80333 München (DE)
(72) Erfinder: LUTZ, Benjamin, 76327 Pfinztal (DE)
(74) Vertreter: Siemens Patent Attorneys
(86) Internationale Anmeldenummer: PCT/EP2023/056013
(87) Internationale Veröffentlichungsnummer: WO 2023/170206

(56) Entgegenhaltungen:
- EP-A2- 2 530 548
- DE-A1- 102009 028 051
- US-A1- 2018 059 921

## Beschreibung

Die Erfindung betrifft ein Leitsystem für eine technische Anlage, insbesondere Fertigungs- oder Prozessanlage. Außerdem betrifft die Erfindung ein Verfahren zum Betreiben eines Leitsystems einer technischen Anlage.

Für die Bedienung und Beobachtung technischer Anlagen können Operatoren durch Personalisierung ihre Tätigkeit optimieren und ihre Abläufe effizienter gestalten. Eine Möglichkeit der Personalisierung sind so genannte Anwenderselektionen, über die beispielsweise zur Laufzeit Faceplate-Gruppen, Trendanzeigen, gefilterte Meldefolgeanzeigen usw. zusammengestellt, persistiert und bei Bedarf auch wieder abgerufen werden können. Anwenderselektionen stellen dabei eine Laufzeitfunktionalität dar, benötigen kein vorausgegangenes Engineering bzw. Projektierung und sind durch die Operatoren flexibel zur Laufzeit konfigurierbar und wartbar.

Tritt eine Situation ein, für die ein Operator eine Anwenderselektion erstellt hat, so muss er nach dem Stand der Technik erst die Situation erkennen (z.B. einen spezifischen Alarm wahrnehmen), sich dann daran erinnern, dass für die Situation eine Anwenderselektion existiert, die eine Anwenderselektion unter vielen identifizieren finden und öffnen. Diese ineffiziente Vorgehensweise ist auch der Grund, weshalb das Potential von Anwenderselektionen zur Laufzeit durch Operatoren bislang nicht vollständig ausgeschöpft werden konnten.

In der EP 3 876 046 A1 ist ein Leitsystem einer technischen Anlage offenbart, welches eine Anpassungen einer durch einen Operator Station Client erfolgten Darbietung von Visualisierungsinformationen durch einen Operator zu einer Laufzeit der technischen Anlage ermöglicht.

Die EP 2 530 548 A2 offenbart ein Prozessleitsystem mit einem Controller und einer Alarmanzeige zur visuellen Darbietung von Alarminformationen bezüglich Feldgeräten.

Die US 2018/059921 A1 offenbart ein Verfahren zum Individualisieren einer grafischen Nutzeroberfläche eines Leitsystems einer technischen Anlage.

Der Erfindung liegt die Aufgabe zugrunde, ein Leitsystem für eine technische Anlage anzugeben, welches die Effizienz einer Bedienung und Beobachtung der technischen Anlage erhöht.

Diese Aufgabe wird gelöst durch Leitsystem für eine technische Anlage mit den Merkmalen des Anspruchs 1. Außerdem wird die Aufgabe gelöst durch ein Verfahren zum Betreiben eines Leitsystems einer technischen Anlage gemäß Anspruch 7. Vorteilhafte Weiterbildungen ergeben sich aus den abhängigen Ansprüchen.

Ein erfindungsgemäßes Leitsystem umfasst wenigstens einen Operator Station Server und wenigstens einen mit dem Operator Station Server verbundenen Operator Station Client. Dabei ist der Operator Station Server dazu ausgebildet ist, Visualisierungsinformationen an den Operator Station Client zu übertragen. Der Operator Station Client ist dazu ausgebildet, mittels der Visualisierungsinformationen eine grafische Darbietung für einen Operator der technischen Anlage zu erzeugen, und der Operator Station Client ist dazu ausgebildet ist, eine Anforderung für eine Modifikation der grafischen Darbietung von dem Operator entgegenzunehmen und an den Operator Station Server zu übermitteln. Der Operator Station Server ist weiterhin dazu ausgebildet, die von dem Operator Station Client empfangene Anforderung in einem Speicher des Operator Station Servers zu hinterlegen.

Das erfindungsgemäße Leitsystem ist dadurch gekennzeichnet, dass Operator Station Client dazu ausgebildet ist, eine von dem Operator vorgebbare Bedingung für die Anwendung der Modifikation der grafischen Darbietung entgegenzunehmen und an den Operator Station Server zu übermitteln. Der Operator Station Server ist dazu ausgebildet, die Bedingung in dem Speicher des Operator Station Servers zu hinterlegen, wobei der Operator Station Server dazu ausgebildet ist, automatisiert zu prüfen, ob die Bedingung erfüllt ist, und für den Fall, dass die Bedingung erfüllt ist, den Operator Station Client dahingehend zu benachrichtigen, und wobei der Operator Station Client dazu ausgebildet ist, für den Fall, dass die Bedingung erfüllt ist, die Modifikation der grafischen Darbietung automatisiert vorzunehmen.

Bei der technischen Anlage kann es sich um eine Anlage aus der Prozessindustrie wie beispielsweise eine chemische, pharmazeutische, petrochemische oder eine Anlage aus der Nahrungs- und Genussmittelindustrie handeln. Hiermit umfasst sind auch jegliche Anlagen aus der Produktionsindustrie, Werke, in denen z.B. Autos oder Güter aller Art produziert werden. Technische Anlagen, die zur Durchführung des erfindungsgemäßen Verfahrens geeignet sind, können auch aus dem Bereich der Energieerzeugung kommen. Windräder, Solaranlagen oder Kraftwerke zur Energieerzeugung sind ebenso von dem Begriff der technischen Anlage umfasst.

Unter einem Leitsystem wird im vorliegenden Kontext ein computergestütztes, technisches System verstanden, das Funktionalitäten zum Darstellen, Bedienen und Leiten der verfahrenstechnischen Anlage umfasst. Das Leitsystem kann auch Sensoren zur Ermittlung von Messwerten sowie verschiedene Aktoren umfassen. Zudem kann das Leitsystem sogenannte prozess- oder fertigungsnahe Komponenten umfassen, die zur Ansteuerung der Aktoren bzw. Sensoren dienen. Darüber hinaus kann das Leitsystem u.a. Mittel zur Visualisierung der verfahrenstechnischen Anlage und zu einem Engineering aufweisen. Das Leitsystem kann optional auch weitere Recheneinheiten für komplexere Regelungen und Systeme zur Datenspeicherung und -verarbeitung umfassen.

Unter einem "Operator Station Server" wird vorliegend ein Server verstanden, der zentral Daten eines Bedien- und Beobachtungssystems sowie in der Regel Alarm- und Messwertarchive eines Leitsystems einer technischen Anlage erfasst und Benutzern zur Verfügung stellt. Der Operator Station Server stellt in der Regel eine Kommunikationsverbindung zu Automatisierungssystemen der technischen Anlage her und gibt Daten der technischen Anlage an sogenannte Operator Station Clients weiter, die zur Bedienung und Beobachtung eines Betriebs der einzelnen Funktionselemente der technischen Anlage dienen. Der Operator Station Server kann über Client-Funktionen verfügen, um auf die Daten (Archive, Meldungen, Tags, Variablen) anderer Operator Station Server zuzugreifen.

Dadurch sind Bilder eines Betriebs der technischen Anlage auf dem Operator Station Server mit Variablen anderer Operator Station Server (Server-Server-Kommunikation) kombinierbar. Bei dem Operator Station Server kann es sich, ohne sich darauf zu beschränken, um einen SIMATIC PCS 7 Industrial Workstation Server der Firma SIEMENS handeln.

Ein Operator der technischen Anlage kann über den Operator Station Client, welcher beispielsweise ein Tablet, ein Smartphone, ein Personal Computer oder dergleichen sein kann, zum Zwecke eines Bedienens und Beobachtens der technischen Anlage auf den Operator Station Server zugreifen.

Eine Modifikation der grafischen Darbietung kann beispielsweise das Einblenden eines grafischen Fensters mit einem Verlauf von Messdaten aus der technischen Anlage, mit einem Bild einer Überwachungskamera, mit einer Visualisierung von technischen Objekten der technischen Anlage oder dergleichen sein. Gleichfalls kann die Modifikation im gezielten Ausblenden bestimmter Bereiche der grafischen Darbietung liegen, um verborgene grafische Objekte für den Operator unmittelbar erkennbar zu machen.

Der Operator Station Client des erfindungsgemäßen Leitsystems nimmt nicht nur die Anforderung des Operators zur Vornahme einer Modifikation entgegen, sondern er nimmt zusätzlich eine Bedingung für die Anwendung dieser Modifikation entgegen und hinterlegt sie in dem Speicher des Operator Station Servers. Diese von dem Operator vorgegebene Information kann von dem Leitsystem oder von zusätzlichen, externen Recheneinheiten genutzt werden, um die Modifikation zielgerichtet beim Vorliegen der vorgegebenen Bedingung vorzunehmen.

Der Operator Station Client ist dazu ausgebildet, für den Fall, dass die Bedingung erfüllt ist, die Modifikation der grafischen Darbietung automatisiert vorzunehmen. Das Leitsystem überwindet die im einleitenden Teil ausgeführten Nachteile bekannter Leitsysteme und kann dazu beitragen, dass das Potential von individuellen Modifikationen der grafischen Darbietung für Operatoren voll ausgeschöpft werden kann.

Weiterhin ist der Operator Station Server dazu ausgebildet, automatisiert zu prüfen, ob die Bedingung erfüllt ist, und für den Fall, dass die Bedingung erfüllt ist, den Operator Station Client dahingehend zu benachrichtigen. Dieser nimmt, wie zuvor erläutert, automatisiert die Modifikation der grafischen Darbietung vor. Zur Prüfung, ob die Bedingung erfüllt ist, kann der Operator Station Server auf Daten aus der technischen Anlage zugreifen, was anhand des Ausführungsbeispiels näher erläutert wird.

Die grafische Darbietung kann ein Anlagenbild der technischen Anlage darstellen. Im Falle einer Prozessanlage kann solch ein Anlagenbild beispielsweise grafische Repräsentationen von Pumpen, Ventilen, Tanks, Rohrleitungen, Brennkammern oder dergleichen umfassen. Die grafischen Repräsentationen können dabei aktuelle Prozessmesswerte, Statuswerte, (Alarm-)Meldungen oder dergleichen umfassen.

Im Rahmen einer vorteilhaften Weiterbildung der Erfindung stellt die Bedingung ein Ereignis dar, wobei der Operator Station Client dazu ausgebildet ist, beim Eintreten des Ereignisses die Modifikation der grafischen Darbietung vorzunehmen. Die Bedingung kann sich auch aus einer logischen Verknüpfung einer Mehrzahl von Ereignissen ergeben. Diese bedeutet, dass die Bedingung als erfüllt gilt, wenn beispielsweise ein Ereignis A, ein Ereignis B und ein Ereignis C eintreten.

Ein Ereignis kann dabei ein Öffnen eines Anlagebildes, ein Öffnen eines Faceplates eines technischen Objektes der technischen Anlage, ein Auftreten eines Alarms, eine Parameteränderung eines technischen Objektes der technischen Anlage, ein Betriebszustand eines technischen Objektes der technischen Anlage, ein Erreichen eines bestimmten Zustandes einer von der technischen Anlage abzuarbeitenden Schrittfolge oder ein Erreichen eines bestimmten Gütekriteriums beim Betrieb der technischen Anlage darstellen.

Die Bedingung kann alternativ oder zusätzlich auch das Vorliegen einer bestimmten Identität, einer bestimmten Rolle oder eines bestimmten Standortes eines den Operator Station Clients bedienenden Operators darstellen. Wenn sich ein Operator beispielsweise innerhalb eines bestimmten Bereiches der technischen Anlage an dem Operator Station Client anmeldet, kann ihm automatisiert eine bestimmte Modifikation der standardmäßigen grafischen Darbietung dargeboten werden, um speziellen Anforderungen des bestimmten Bereiches (wie speziellen Umweltbedingungen) gerecht zu werden. Auch eine Identität bzw. eine Rolle eines Operators können eine Bedingung (ggf. zusätzlich zu den bereits erwähnten Bedingungen / Ereignissen) darstellen, die für die Modifikation der grafischen Darbietung erfüllt sein muss. Eine "Rolle" kann dabei bedeuten, dass dem betreffenden Operator in Ausübung seiner Rolle bestimmte Funktionsrechte zustehen, was ggf. bestimmte Modifikation der grafischen Darbietung nicht erlaubt. Diese Funktionsrechte betreffen in der Regel eine Bedienung und Beobachtung bestimmter Komponenten der technischen Anlage. Beispielsweise können einem ersten Operator Beobachtungsrechte für einige Komponenten und Bedienrechte für andere Komponenten zugewiesen sein, während einem zweiten Operator für alle Komponenten Beobachtungs- und Bedienrechte zugewiesen sind.

Die Aufgabe wird zudem gelöst durch ein Verfahren zum Betreiben eines Leitsystems einer technischen Anlage, insbesondere Fertigungs- oder Prozessanlage, das wenigstens einen Operator Station Server und wenigstens einen Operator Station Client umfasst, wobei der Operator Station Server dazu ausgebildet, Visualisierungsinformationen an den Operator Station Client zu übertragen, und wobei der Operator Station Client dazu ausgebildet ist, mittels der Visualisierungsinformationen eine grafische Darbietung für einen Operator der technischen Anlage zu erzeugen, das Verfahren umfassend:
a) Entgegennehmen einer Anforderung für eine Modifikation der grafischen Darbietung und einer Bedingung für die Anwendung der Modifikation von einem Operator der technischen Anlage durch den Operator Station Client,
b) Übertragen der Anforderung und der Bedingung von dem Operator Station Client an den Operator Station Server,
c) Hinterlegen der Anforderung und der Bedingung in einem Speicher des Operator Station Servers.

Der Operator Station Client kann für den Fall, dass die Bedingung erfüllt ist, die Modifikation der grafischen Darbietung automatisiert vornehmen.

Weiterhin kann der Operator Station Server automatisiert prüfen, ob die Bedingung erfüllt ist, und für den Fall, dass die Bedingung erfüllt ist, den Operator Station Client dahingehend benachrichtigt.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung von Ausführungsbeispielen, die im Zusammenhang mit den Zeichnungen näher erläutert werden. Es zeigen:
- FIG 1: eine grafische Darbietung einer technischen Anlage gemäß einem ersten Aspekt;
- FIG 2: eine grafische Darbietung einer technischen Anlage gemäß einem zweiten Aspekt;
- FIG 3: eine grafische Darbietung einer technischen Anlage gemäß einem dritten Aspekt; und
- FIG 4: ein erfindungsgemäßes Leitsystem in einer schematischen Darstellung.

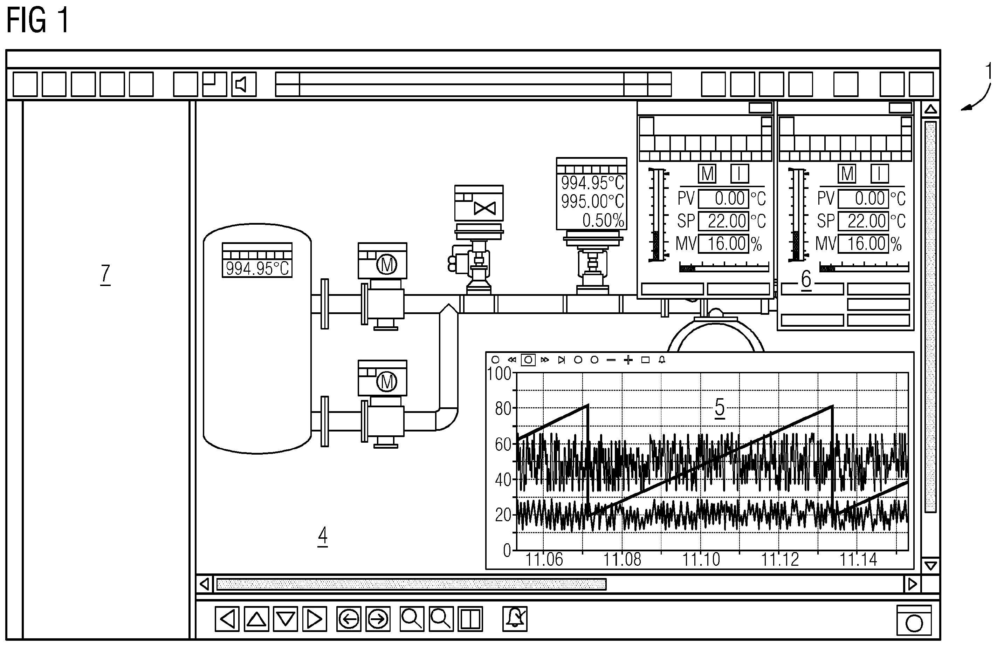

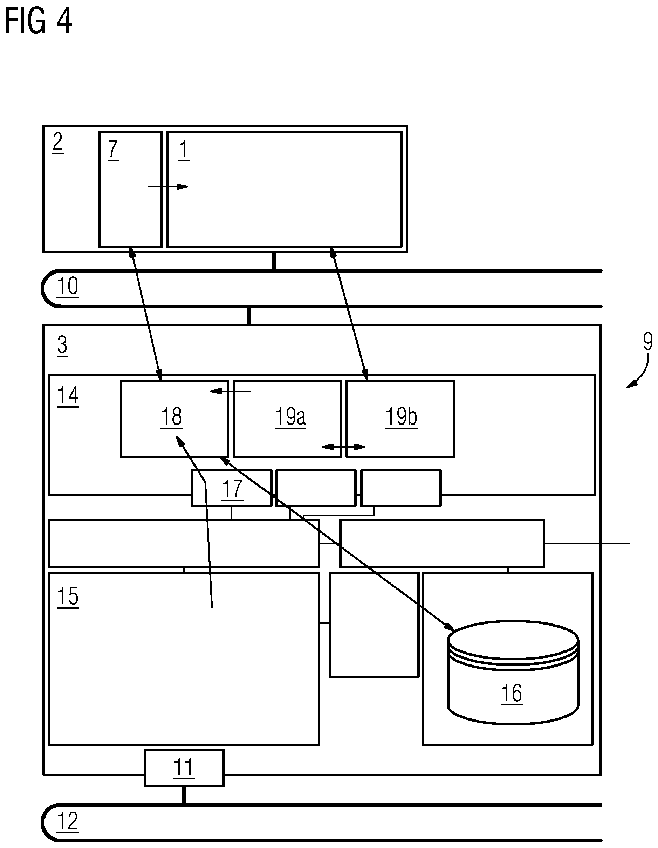

In FIG 1 ist ein eine grafische Benutzeroberfläche als grafische Darbietung 1 dargestellt, die ein Operator Station Client 2 eines Leitsystems 9 einer als Prozessanlage ausgebildeten technischen Anlage einem Operator der Prozessanlage zum Zwecke eines Bedienens und Beobachtens der technischen Anlage darbietet. Die hierfür notwendigen Visualisierungsinformationen erhält der Operator Station Client von einem Operator Station Server 3 des Leitsystems 9 (vgl. FIG 4).

In der Benutzeroberfläche 1 ist ein Anlagenbild 4 dargestellt, welches wiederum eine Mehrzahl von grafischen Repräsentationen einzelner Prozessobjekte der Prozessanlage umfasst (u.a. Heizkessel, Pumpe, Ventil etc.). Der Operator kann Elemente der Benutzeroberfläche 1 auswählen, die im Rahmen einer späteren Modifikation der grafischen Benutzeroberfläche 1 verwendet werden sollen. Ein erstes Element 5 stellt einen zeitlichen Verlauf von Prozessmesswerten dar. Ein zweites Element 6 stellt sogenannte Faceplates von Prozessobjekten dar, mittels derer der Operator die Prozessobjekte bedienen und beobachten kann.

Der Operator legt die beiden Elemente 5, 6 (grafisch) in einem Selektionsdienst 7 (genauer: in dessen grafischer Schnittstelle) ab. Dies bedeutet dabei, dass das jeweilige Element 5, 6 beim Vorliegen einer bestimmten Bedingung zu einem späteren Zeitpunkt wieder in der grafischen Benutzeroberfläche 1 geöffnet und dargestellt wird. In dem Selektionsfenster 8 kann der Operator bestimmen, unter welcher Bedingung dieses Öffnen stattfinden soll. So kann er beispielsweise festlegen, dass das erste Element 5 immer dann geöffnet wird, wenn ein Standardanlagenbild 8 (ein "Startbildschirm") geöffnet wird. Das zweite Element 6 kann beispielsweise dann geöffnet und dargestellt werden, wenn ein vorgebbarer Alarm auftritt.

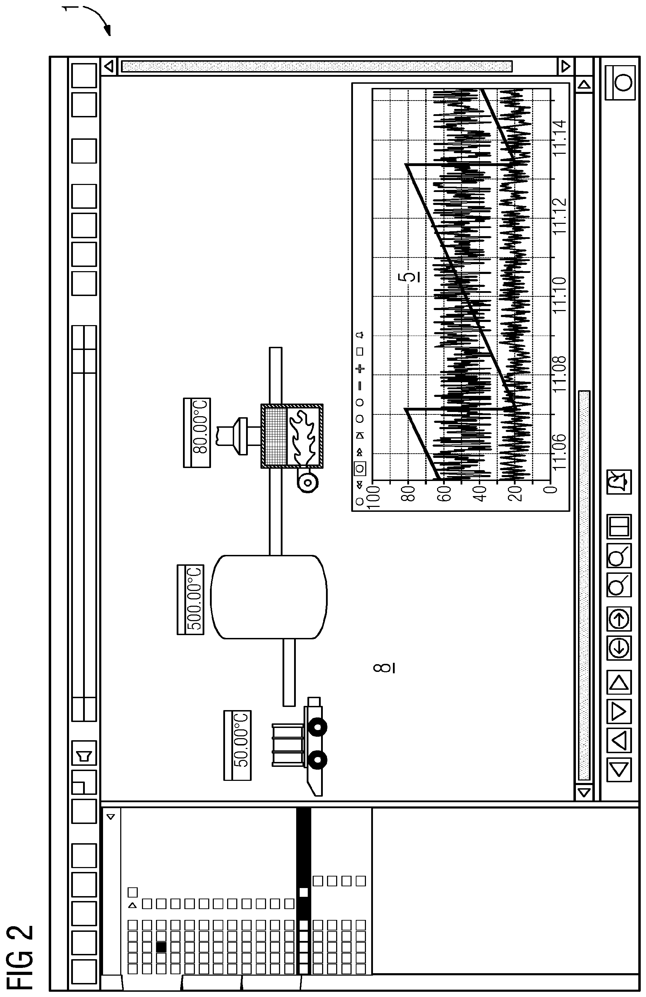

In FIG 2 ist ein solches Standardanlagenbild 8 dargestellt, dessen Öffnen durch den Operator (oder durch einen weiteren Operator) automatisiert das Öffnen des ersten Elements 5 triggert. Der Operator muss dies - im Gegensatz zum Stand der Technik - nicht mühsam manuell vornehmen, was die Bedienung und Beobachtung der Prozessanlage deutlich erleichtert. Das Öffnen des Standardanlagenbildes 8 stellt dabei ein Ereignis bzw. eine Bedingung dar, dessen Erfüllung den Operator Station Client 2 dazu triggert, eine Modifikation der grafischen Darbietung, nämlich ein Öffnen des ersten Elementes 5 vorzunehmen.

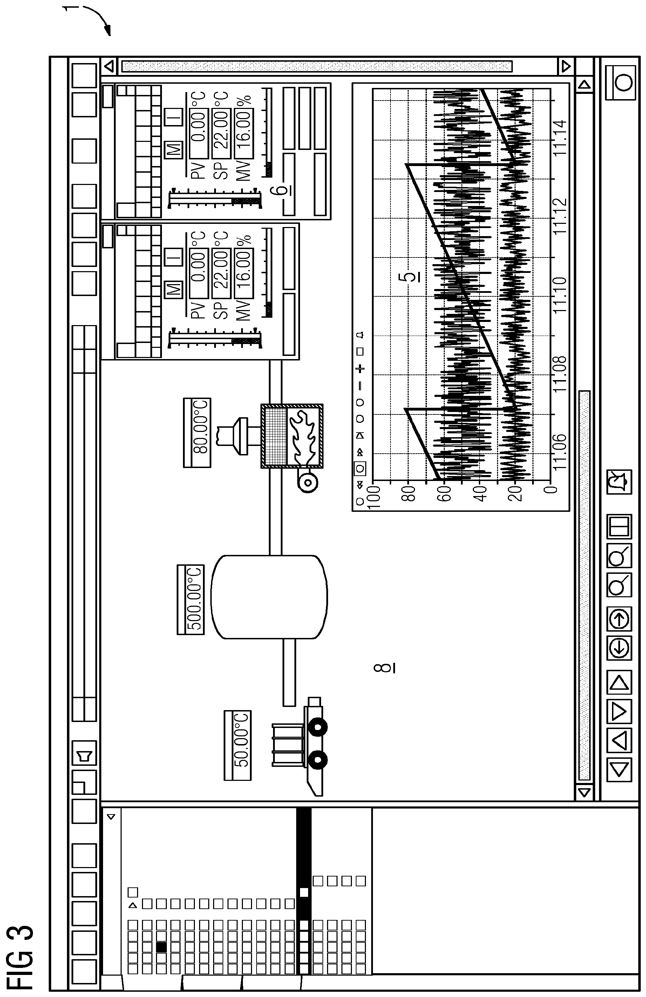

FIG 3 zeigt im Vergleich zu FIG 2 zusätzlich ein visuell dargestelltes zweites Element 6, welches durch das Ereignis / die Bedingung einer aufgekommenen Alarmmeldung durch den Operator Station Client 2 automatisiert geöffnet wurde.

In FIG 4 ist das Leitsystem 9 für die Prozessanlage schematisch dargestellt. Das Leitsystem 9 umfasst den zuvor bereits genannten Operator Station Client 2 und den Operator Station Server 3. Der Operator Station Server 3 und der Operator Station Client 2 sind über einen Terminalbus 10 miteinander und optional mit nicht dargestellten weiteren Komponenten des Leitsystems 9 wie einem Engineering Station Server oder einem Archivserver verbunden.

Ein Benutzer bzw. Operator kann zum Zwecke des Bedienens und Beobachtens über den Operator Station Client 2 mittels des Terminalbus 10 auf den Operator Station Server 3 zugreifen. Der Terminalbus 10 kann, ohne sich darauf zu beschränken, beispielsweise als Industrial Ethernet ausgebildet sein.

Der Operator Station Server 3 weist eine Geräteschnittstelle 11 auf, die mit einem Anlagenbus 12 verbunden ist. Über diese Geräteschnittstelle 11 kann der Operator Station Server 3 mit einem Automatisierungsgerät 13 (nicht dargestellt) sowie mit optional vorhandenen weiteren Komponenten der verfahrenstechnischen Anlage wie Peripheriegeräten (nicht dargestellt) kommunizieren. Der Anlagenbus 12 kann, ohne sich darauf zu beschränken, beispielsweise als Industrial Ethernet ausgebildet sein.

Auf dem Operator Station Server 3 sind (unter anderem) ein Visualisierungsdienst 14, ein Prozessabbild 15 und ein Speicher 16 implementiert. Der in dem Operator Station Server 3 integrierte Visualisierungsdienst 14 initiiert eine Übertragung von Visualisierungsinformationen an den Operator Station Client 2. Der Operator Station Client 2 ist dazu ausgebildet, eine grafische Darbietung, insbesondere von Anlagenbildern, zum Bedienen und Beobachten der Prozessanlage darzustellen.

In dem Prozessabbild 15 des Operator Station Servers 3 ist eine Momentaufnahme der (Signal-)Zustände von mit dem Operator Station Server 3 verbundenen Geräten und/oder Applikationen (in der Figur nicht dargestellt) hinterlegt. Ein Alarmdienst 17 kann Alarmmeldungen aus dem Prozessabbild 15 auslesen und beispielsweise eine grafische Aggregation der Alarmmeldungen erzeugen, die der Operator Station Client 2 darstellen kann.

Ein Benutzerauswahldienst 18 hat Zugriff auf den Speicher 16 des Operator Station Servers 3. Dort können Anwenderprofile und persönliche Einstellungen von Operatoren/Bedienern der Prozessanlage hinterlegt werden. Diese können auch für weitere Operatoren/Bediener zugänglich sein. Der Benutzerauswahldienstes 18 hat Zugriff auf den Selektionsdienst 7, in welchem der Operator, wie anhand der Figuren 1 bis 3 erläutert, die Anforderungen und Bedingungen für die automatisierte grafische Modifikation der grafischen Darbietung des Operator Station Clients 2 vorgibt. Er hinterlegt diese Daten nach dem Empfang von dem Operator Station Client 2 in dem Speicher 16 des Operator Station Servers 3.

Ein Benutzeroberflächendienst 19a, 19b überwacht die von dem Operator Station Client 2 dargebotene grafische Benutzeroberfläche 1 und teilt dem Benutzerauswahldienst 18 etwaige, von einem Operator vorgenommene Änderungen an der grafischen Benutzeroberfläche 1 mit. Eine solche Änderung kann beispielsweise ein Öffnen oder Schließen eines Anlagenbildes oder eines sonstigen Elementes sein. Der Alarmdienst 17 teilt dem Benutzerauswahldienst 18 das Auftreten etwaiger Alarmmeldungen mit.

Der Benutzerauswahldienst 18 prüft dabei automatisiert, ob die in dem Speicher 16 hinterlegten Bedingungen für eine Modifikation der grafischen Darbietung erfüllt sind und initiiert, für den Fall, dass die Bedingung erfüllt ist, die Modifikation, indem sie den Operator Station Client 2 entsprechend triggert.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Leitsystem (9) für eine technische Anlage, insbesondere Fertigungs- oder Prozessanlage, das wenigstens einen Operator Station Server (3) und wenigstens einen mit dem Operator Station Server verbundenen Operator Station Client (2) umfasst, wobei der Operator Station Server (3) dazu ausgebildet ist, Visualisierungsinformationen an den Operator Station Client (2) zu übertragen,
und wobei der Operator Station Client (2) dazu ausgebildet ist, mittels der Visualisierungsinformationen eine grafische Darbietung (1) für einen Operator der technischen Anlage zu erzeugen,
und wobei der Operator Station Client (2) dazu ausgebildet ist, eine Anforderung für eine Modifikation der grafischen Darbietung (1) von dem Operator entgegenzunehmen und an den Operator Station Server (3) zu übermitteln,
und wobei der Operator Station Server (3) dazu ausgebildet ist, die von dem Operator Station Client (2) empfangene Anforderung in einem Speicher (16) des Operator Station Servers (3) zu hinterlegen,
**dadurch gekennzeichnet, dass**
der Operator Station Client (2) dazu ausgebildet ist, eine von dem Operator vorgebbare Bedingung für die Anwendung der Modifikation der grafischen Darbietung (1) entgegenzunehmen und an den Operator Station Server (3) zu übermitteln, wobei der Operator Station Server (3) dazu ausgebildet ist, die Bedingung in dem Speicher (16) des Operator Station Servers (3) zu hinterlegen, wobei der Operator Station Server (3) dazu ausgebildet ist, automatisiert zu prüfen, ob die Bedingung erfüllt ist, und für den Fall, dass die Bedingung erfüllt ist, den Operator Station Client (2) dahingehend zu benachrichtigen, und wobei der Operator Station Client (2) dazu ausgebildet ist, für den Fall, dass die Bedingung erfüllt ist, die Modifikation der grafischen Darbietung (1) automatisiert vorzunehmen.

2. Leitsystem (9) gemäß Anspruch 1, bei dem die grafische Darbietung (1) ein Anlagenbild (4, 8) der technischen Anlage darstellt.

3. Leitsystem (9) gemäß einem der vorangegangenen Ansprüche, bei dem die Bedingung ein Ereignis darstellt, wobei der Operator Station Client (2) dazu ausgebildet ist, beim Eintreten des Ereignisses die Modifikation der grafischen Darbietung (1) vorzunehmen.

4. Leitsystem (9) gemäß Anspruch 3, bei dem sich die Bedingung aus einer logischen Verknüpfung einer Mehrzahl von Ereignisse ergibt.

5. Leitsystem (9) gemäß Anspruch 3 oder 4, bei dem ein Ereignis ein Öffnen eines Anlagebildes (4, 8) , ein Öffnen eines Faceplates eines technischen Objektes der technischen Anlage, ein Auftreten eines Alarms, eine Parameteränderung eines technischen Objektes der technischen Anlage, ein Betriebszustand eines technischen Objektes der technischen Anlage, ein Erreichen eines bestimmten Zustandes einer von der technischen Anlage abzuarbeitenden Schrittfolge oder ein Erreichen eines bestimmten Gütekriteriums beim Betrieb der technischen Anlage darstellt.

6. Leitsystem (9) gemäß einem der vorangegangenen Ansprüche, bei dem die Bedingung das Vorliegen einer bestimmten Identität, einer bestimmten Rolle oder eines bestimmten Standortes eines den Operator Station Client (2) bedienenden Operators darstellt.

7. Verfahren zum Betreiben eines Leitsystems (9) einer technischen Anlage, insbesondere Fertigungs- oder Prozessanlage, das wenigstens einen Operator Station Server (3) und wenigstens einen Operator Station Client (2) umfasst, wobei der Operator Station Server (3) dazu ausgebildet, Visualisierungsinformationen an den Operator Station Client (2) zu übertragen,
und wobei der Operator Station Client (2) dazu ausgebildet ist, mittels der Visualisierungsinformationen eine grafische Darbietung (1) für einen Operator der technischen Anlage zu erzeugen, das Verfahren umfassend:
a) Entgegennehmen einer Anforderung für eine Modifikation der grafischen Darbietung (1) und einer Bedingung für die Anwendung der Modifikation von einem Operator der technischen Anlage durch den Operator Station Client (2),
b) Übertragen der Anforderung und der Bedingung von dem Operator Station Client (2) an den Operator Station Server (3),
c) Hinterlegen der Anforderung und der Bedingung in einem Speicher (16) des Operator Station Servers (3),
d) Automatisiertes Prüfen durch den Operator Station Server (3), ob die Bedingung erfüllt ist, und für den Fall, dass die Bedingung erfüllt ist, dahingehendes Benachrichtigen des Operator Station Clients (2) durch den Operator Station Server (3),
e) Für den Fall, dass die Bedingung erfüllt ist, automatisiertes Vornehmen der Modifikation der grafischen Darbietung (1) durch den Operator Station Client (2).

## Claims

1. Control system (9) for a technical installation, in particular production or process installation, which comprises at least one operator station server (3) and at least one operator station client (2) connected to the operator station server, wherein the operator station server (3) is embodied to transmit visualisation information to the operator station client (2),
and wherein the operator station client (2) is embodied to generate a graphical display (1) for an operator of the technical installation by means of the visualisation information,
and wherein the operator station client (2) is embodied to accept a request for a modification of the graphical display (1) from the operator and to transmit the same to the operator station server (3),
and wherein the operator station server (3) is embodied to store the request received by the operator station client (2) in a memory (16) of the operator station server (3),
**characterised in that**
the operator station client (2) is embodied to accept a condition for the application of the modification of the graphical display (1) which can be specified by the operator and to transmit the same to the operator station server (3), wherein the operator station server (3) is embodied to store the condition in the memory (16) of the operator station server (3), wherein the operator station server (3) is embodied to automatically check whether the condition is fulfilled and, in the event that the condition is fulfilled, to notify the operator station client (2) to that effect, and wherein the operator station client (2) is embodied to automatically perform the modification of the graphical display (1) in the event that the condition is fulfilled.

2. Control system (9) according to claim 1, in which the graphical display (1) represents an installation image (4, 8) of the technical installation.

3. Control system (9) according to one of the preceding claims, in which the condition represents an event, wherein the operator station client (2) is embodied to perform the modification of the graphical display (1) when the event occurs.

4. Control system (9) according to claim 3, in which the condition is produced from a logical link of a plurality of events.

5. Control system (9) according to claim 3 or 4, in which an event represents an opening of an installation image (4, 8), an opening of a faceplate of a technical object of the technical installation, an occurrence of an alarm, a parameter change of a technical object of the technical installation, an operating state of a technical object of the technical installation, the achievement of a specific state of a sequence of steps to be worked through by the technical installation or the achievement of a specific quality criterion during operation of the technical installation.

6. Control system (9) according to one of the preceding claims, in which the condition represents the presence of a specific identity, a specific role or a specific location of an operator operating the operator station client (2).

7. Method for operating a control system (9) of a technical installation, in particular production or process installation, which comprises at least one operator station server (3) and at least one operator station client (2), wherein the operator station server (3) is embodied to transmit visualisation information to the operator station client (2),
and wherein the operator station client (2) is embodied to generate a graphical display (1) for an operator of the technical installation by means of the visualisation information, the method comprising:
a) accepting a request for a modification of the graphical display (1) and a condition for the application of the modification from an operator of the technical installation by way of the operator station client (2),
b) transmitting the request and the condition from the operator station client (2) to the operator station server (3),
c) storing the request and the condition in a memory (16) of the operator station server (3),
d) automatically checking by way of the operator station server (3) whether the condition is fulfilled, and in the event that the condition is fulfilled, notifying the operator station client (2) by way of the operator station server (3) to that effect,
e) in the event that the condition is fulfilled, automatically performing the modification of the graphical display (1) by way of the operator station client (2).

## Revendications

1. Système (9) de conduite d'une installation technique, en particulier d'une installation de fabrication ou de processus, qui comprend au moins un operator station server (3) et au moins un operator station client (2) relié à l'operator station server, dans lequel l'operator station server (3) est constitué pour transmettre des informations de visualisation à l'operator station client (2),
et dans lequel l'operator station client (2) est constitué pour produire, au moyen des informations de visualisation, une représentation (1) graphique pour un opérateur de l'installation technique,
et dans lequel l'operator station client (2) est constitué pour recevoir de l'opérateur une demande d'une modification de la représentation (1) graphique et la transmettre à l'operator station server (3),
et dans lequel l'operator station server (3) est constitué pour mettre la demande reçue de l'operator station client (2) dans une mémoire (16) de l'operator station server (3),
**caractérisé en ce que**
l'operator station client (2) est constitué pour recevoir une condition, pouvant être prescrite par l'opérateur, pour l'application de la modification de la représentation (1) graphique et la transmettre à l'operator station server (3), dans lequel l'operator station server (3) est constitué pour mettre la condition dans la mémoire (16) de l'operator station servers (3), dans lequel l'operator station server (3) est constitué pour contrôler automatiquement, si la condition est satisfaite et, dans le cas où la condition est satisfaite, pour en avertir l'operator station client (2), et dans lequel l'operator station client (2) est constitué pour effectuer, de manière automatisée, dans le cas où la condition est satisfaite, la modification de la représentation (1) graphique.

2. Système (9) de conduite suivant la revendication 1, dans lequel la représentation (1) graphique représente une image (4, 8) d'installation de l'installation technique.

3. Système (9) de conduite suivant l'une des revendications précédentes, dans lequel la condition représente un évènement, dans lequel l'operator station client (2) est constitué pour effectuer, à la survenance de l'évènement, la modification de la représentation (1) graphique.

4. Système (9) de conduite suivant la revendication 3, dans lequel la condition provient d'une combinaison logique d'une pluralité d'évènements.

5. Système (9) de conduite suivant la revendication 3 ou 4, dans lequel l'évènement représente l'ouverture d'une image (4, 8) d'installation, l'ouverture d'une faceplate d'un objet technique de l'installation technique, la survenance d'une alerte, la modification de paramètre d'un objet technique de l'installation technique, l'état de fonctionnement d'un objet technique de l'installation technique, l'atteinte d'un état déterminé d'une succession de stades à élaborer par l'installation technique où l'atteinte d'un critère de qualité déterminé lors du fonctionnement de l'installation technique.

6. Système (9) de conduite suivant l'une des revendications précédentes, dans lequel la condition représente l'existence d'une identité déterminée, un rôle déterminé ou un lieu déterminé d'un opérateur commandant l'operator station client (2).

7. Procédé pour faire fonctionner un système (9) de conduite d'une installation technique, en particulier d'une installation de fabrication ou de processus, qui comprend au moins un operator station server (3) et au moins un operator station client (2), dans lequel l'operator station server (3) est constitué pour transmettre des informations de visualisation à l'operator station client (2),
et dans lequel l'operator station client (2) est constitué pour, au moyen des informations de visualisation, produire une représentation (1) graphique pour un opérateur de l'installation technique, le procédé comprenant :
a) recevoir, d'un opérateur de l'installation technique par l'operator station client (2), une demande de modification de la représentation (1) graphique et une condition pour l'application de la modification,
b) transmettre la demande et la condition de l'operator station client (2) à l'operator station server (3),
c) mettre la demande et la condition dans une mémoire (16) de l'operator station server (3),
d) contrôler, de manière automatisée, par l'operator station server (3), si la condition est satisfaite et, dans le cas où la condition est satisfaite, en avertir l'operator station client (2) par l'operator station server (3),
e) dans le cas où la condition est satisfaite, effectuer, de manière automatisée, la modification de la représentation (1) graphique par l'operator station client (2).
